# FASCICULE DE BREVET EUROPEEN

(11) **EP 1 236 598 B1**
(45) Date de publication et mention de la délivrance du brevet: **28.04.2004**
(21) Numéro de dépôt: 02364011.3
(22) Date de dépôt: 27.02.2002
(51) Int. Cl.: B60J 1/20

(54) **Store pour véhicule automobile, adapté aux vitres non rectangulaires**
Rollo für Fahrzeuge, geeignet für nicht rechteckige Scheiben
Roller blind for vehicle, adapted to non-rectangular windows

(30) Priorité: 28.02.2001 FR 0102774
(43) Date de publication de la demande: 04.09.2002
(73) Titulaire: WAGON AUTOMOTIVE SNC, 79302 Bressuire Cédex (FR)
(72) Inventeur: Moreau, Stéphane, 37500 Cravant-les-Coteaux (FR)
(74) Mandataire: Vidon, Patrice

(56) Documents cités:
- EP-A- 0 694 424
- DE-A- 19 835 257
- FR-A- 2 724 876
- US-A- 5 404 926

## Description

Le domaine de l'invention est celui des stores, notamment pour véhicule automobile. Plus précisément, l'invention concerne les stores à rideau amovible, destiné à être déployé pour occulter une baie non rectangulaire, et circulant dans une fente, ménagée par exemple dans la tablette arrière d'un véhicule, ou dans un boîtier prévu à cet effet.

L'invention concerne notamment les stores à enrouleur, mais d'autres modes de repliement de la toile peuvent, bien sûr, être mis en oeuvre (tels que par exemple un repliement de la toile suivant des plis préformés).

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

En position repliée, la toile est essentiellement enroulée autour du tube d'enroulement, et la barre de tirage vient, par exemple, en appui sur l'habillage intérieur ou sur la tablette arrière du véhicule. Dans ce cas, elle est en général conçue pour occulter la fente dans laquelle circule la toile.

En effet, il est souhaitable d'occulter cette fente, tant pour des raisons évidentes d'esthétique, que pour éviter que de la poussière et de petits objets pénètrent dans le boîtier par la fente de guidage, risquant de bloquer ou détériorer l'ensemble du mécanisme.

Cependant, dans de nombreux cas, et par exemple pour les vitres arrière de la plupart des véhicules actuels, la baie, et par voie de conséquence la toile, présentent une forme non rectangulaire, et souvent trapézoïdale. Plus précisément, le côté de la toile relié au rouleau (par exemple la base du trapèze) est souvent plus grand que le côté relié à la barre de tirage. La forme de la toile peut être quelconque, notamment en fonction de la forme de la baie à occulter.

Dans ce cas, bien entendu, la barre de tirage a une longueur égale à (ou voisine de) celle de ce côté, et ne peut donc pas obturer complètement la fente : deux ouvertures restent, de part et d'autre de la barre de tirage.

Cela n'est pas acceptable, pour les raisons d'esthétique et de protection du mécanisme déjà mentionnées.

Pour pallier ce problème, on a proposé des systèmes venant recouvrir l'ensemble de la fente et la barre de tirage. Toutefois, ces capots entraînent une augmentation de la complexité et de l'encombrement du store.

On peut également envisager des capots adaptés pour obturer sélectivement chacune des deux ouvertures latérales. Mais cela suppose un mécanisme complexe et précis, et donc coûteux.

Le document EP-0 694 424 présente un store destiné à être monté en regard d'une baie trapézoïdale. Selon cette technique, il est prévu d'équiper le store d'une barre de tirage comprenant deux parties, la seconde étant articulée sur la première.

La seconde partie peut ainsi pivoter entre deux positions : une première position dans laquelle elle est inclinée par rapport à la première, et une deuxième position dans laquelle elle s'étend dans le prolongement de la première.

Lorsque le store est déployé, des moyens de rappel agissent sur la seconde partie de sorte qu'elle prenne une position inclinée par rapport à la première. Lors du repliement, la partie articulée vient en contact avec le boîtier, ce qui provoque son pivotement jusqu'à une position dans laquelle elle s'étend dans le prolongement.

Toutefois, cela suppose une coopération entre la toile et l'extrémité libre de la partie articulée, et donc un mécanisme complexe, précis et coûteux.

L'invention a notamment pour objectif de pallier ces inconvénients de l'art antérieur.

Plus précisément, l'invention a notamment pour objectif de fournir un store adapté à l'occultation d'une baie non rectangulaire, et par exemple trapézoïdale, et permettant une occultation efficace et totale de la fente de circulation de la toile.

Un autre objectif de l'invention est de fournir un tel store, qui ne nécessite pas d'éléments d'occultation indépendants du store, tels qu'un ou plusieurs capots.

Encore un autre objectif de l'invention est de fournir un tel store, qui reste aisé à fabriquer et à monter, avec un coût de revient raisonnable.

Un autre objectif de l'invention est de fournir un tel store, qui présente de bonnes qualités esthétiques (intégration dans le véhicule, faible encombrement,...), ergonomiques, et de confort (absence de bruits intempestifs notamment).

L'invention a également pour objectif de fournir un tel store, qui puisse être motorisé, dans certains modes de réalisation, et équipé de roulettes d'appui contre la vitre.

Encore un autre objectif de l'invention est de fournir un tel store offrant une certaine tolérance du positionnement de la barre de tirage, tant en position déployée qu'en position repliée (tout en conservant une bonne occultation de la fente).

Ces objectifs, ainsi que d'autres qui apparaîtront par la suite, sont atteints à l'aide d'un store pour véhicule automobile, destiné à occulter une baie non rectangulaire, comprenant une barre de tirage montée à l'extrémité libre d'une toile d'occultation pouvant circuler dans une fente entre une position repliée et une position déployée.

Selon l'invention, ladite barre de tirage coopère avec au moins un élément d'extrémité pouvant prendre au moins deux positions :
- une position d'obturation de ladite fente, dans laquelle il s'étend sensiblement dans le prolongement de ladite barre de tirage, pour que l'ensemble formé par ladite barre de tirage et le ou lesdits éléments d'extrémité occulte l'intégralité de ladite fente ;
- une position à encombrement réduit, dans laquelle il est replié par rapport à ladite barre de tirage, de façon que l'ensemble formé par ladite barre de tirage et le ou lesdits éléments d'extrémité présente une longueur inférieure à celle du même ensemble dans la position d'obturation de ladite fente.

Ainsi, l'invention propose une approche tout à fait nouvelle et inventive de la conception de stores de forme non rectangulaire pour automobile, dans lesquels la barre de tirage est de longueur variable. En d'autres termes; la longueur de la barre de tirage peut varier, selon que la toile est repliée (la barre vient alors obturer l'intégralité de la fente) ou déployée (la barre présente alors un encombrement réduit).

De plus, selon l'invention, ladite barre de tirage et/ou au moins un desdits éléments d'extrémité portent au moins une roulette destinée à prendre appui contre une vitre à occulter, chacune desdites roulettes étant :
- dans une position de stockage, au moins partiellement dans un logement ménagé dans ladite barre de tirage et/ou au moins un desdits éléments d'extrémité, lorsque ledit élément d'extrémité est dans sa position d'obturation de ladite fente ;
- dans une position de travail, lorsque ledit élément d'extrémité est dans sa position à encombrement réduit.

Ainsi, chaque roulette, en appui sur la vitre à occulter, permet de guider le déploiement du store lorsque les éléments d'extrémité sont repliés, et est dissimulée en position de stockage lorsque la toile du store est repliée.

Dans un mode de réalisation particulier de l'invention, un tel store comprend deux éléments d'extrémité symétriques.

En effet, une baie arrière de véhicule automobile est généralement de forme trapézoïdale isocèle, de sorte que la présence d'éléments d'extrémité symétriques de part et d'autre de la barre de tirage permet d'obturer parfaitement la fente lorsque la toile est en position repliée.

On pourrait bien sûr aussi envisager que les éléments d'extrémité ne soient pas symétriques, par exemple dans le cas où le store est destiné à obturer une baie de forme trapézoïdale quelconque. Par exemple, dans le cas d'une vitre latérale, on peut prévoir des clapets de longueurs différentes, voire, si la vitre définit un trapèze rectangle, un seul clapet.

Dans un premier mode de réalisation de l'invention, chacun desdits éléments d'extrémité coulisse dans ladite barre de tirage.

Dans un deuxième mode de réalisation préféré de l'invention, chacun desdits éléments d'extrémité forme un clapet, articulé à une des extrémités de ladite barre de tirage.

Avantageusement, dans ladite position à encombrement réduit, ledit clapet forme un angle non nul avec ladite barre de tirage, et se dirige sensiblement parallèlement au bord latéral correspondant de ladite toile.

Le clapet est ainsi replié de façon à venir en appui sur, ou à proximité de la toile, ce qui permet notamment de satisfaire un critère esthétique.

Préférentiellement, un tel store comprend des moyens de rappel tendant à ramener et/ou à maintenir ledit élément d'extrémité dans sa position à encombrement réduit.

On évite ainsi tout déploiement intempestif des éléments d'extrémité lorsque la toile est en position dépliée ou partiellement dépliée, ainsi que d'éventuels problèmes de bruits, dus par exemple aux chocs ou aux vibrations qui pourraient entraîner des contacts bruyants (et susceptibles, à terme, de provoquer des détériorations) entre les clapets et le support.

Selon une variante de réalisation avantageuse de l'invention, lesdits moyens de rappel comprennent un ressort de torsion.

Avantageusement, ladite roulette passe de ladite position de travail à ladite position de stockage par contact avec le bord de la fente, lors du repliement de la toile.

Selon une technique avantageuse de l'invention, un tel store comprend un ressort facilitant le passage de ladite position de travail à ladite position de stockage.

Par exemple, le contact avec le bord de la fente vient comprimer le ressort qui maintenait la roulette en position de travail, de sorte que la roulette passe en position de stockage.

Selon une caractéristique avantageuse de l'invention, ladite roulette passe de ladite position de stockage à ladite position de travail lorsque ledit élément d'extrémité passe de ladite position d'obturation de ladite fente à ladite position à encombrement réduit.

Le passage de la roulette en position de travail est ainsi automatique, dès que le début du déploiement du store.

Selon une variante préférée de l'invention, ledit élément d'extrémité coopère avec une languette guidant l'axe de ladite roulette dans un oblong prévu à cet effet.

Avantageusement, ladite toile est montée sur un tube d'enroulement.

On peut bien sûr aussi envisager que la toile soit pliée selon des plis préformés, ou selon toute autre technique adaptée.

Selon un mode de réalisation particulier de l'invention, le déploiement et/ou le repliement de ladite toile est motorisé.

Un dispositif manuel peut également être mis en oeuvre, en agissant directement sur la barre de tirage.

Dans un mode de réalisation préféré de l'invention, un tel store est prévu pour être monté sous une tablette arrière de véhicule, dans laquelle est ménagée ladite fente.

Le store peut également être monté dans un boîtier, dissimulé ou non.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un store selon l'invention en position enroulée, selon un premier mode de réalisation dans lequel la barre de tirage est munie à ses extrémités de clapets ;
- la figure 2 présente un clapet de la figure 1 en position d'obturation ;
- la figure 3 illustre le store de la figure 1 en position déroulée ;
- la figure 4 détaille le clapet de la figure 3 en position d'encombrement réduit ;
- les figures 5a et 5b présentent un clapet coopérant avec une roulette de guidage selon un deuxième mode de réalisation, respectivement en position d'obturation et en position d'encombrement réduit ;
- les figures 6a et 6b présentent une vue en coupe des clapets des figures 5a et 5b.

Le principe général de l'invention repose sur la présence d'éléments d'extrémité de part et d'autre d'une barre de tirage, de façon que la longueur de la barre soit variable, entre une position d'obturation de la fente dans laquelle le store est replié, et une position dans laquelle la toile du store est déployée.

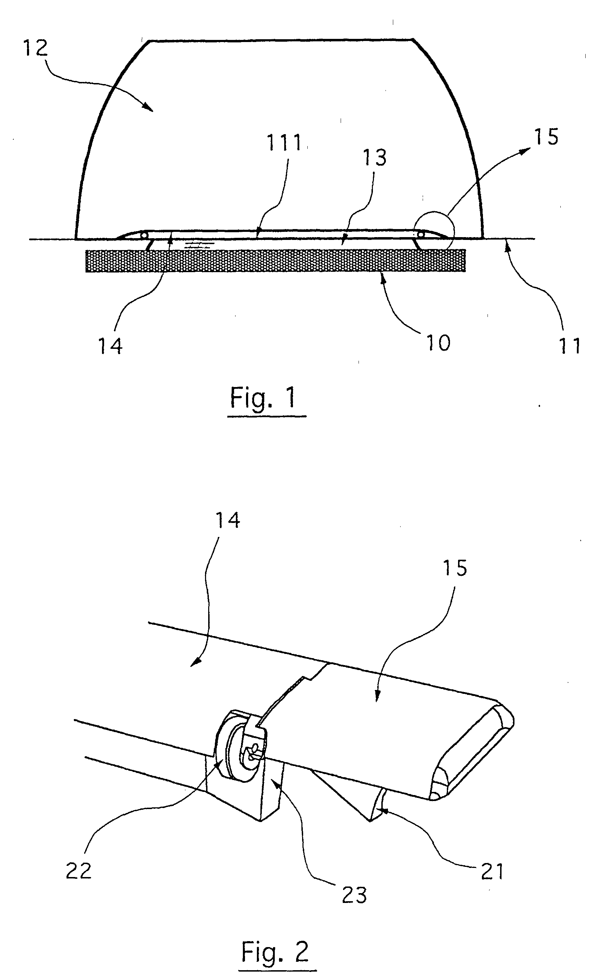

La figure 1 représente un store à enrouleur monté sous la tablette arrière 11 d'un véhicule, par exemple dans une cassette 10, dont le rideau est susceptible d'être déployé devant une baie vitrée 12, au travers d'une fente 111.

On peut aussi envisager, dans un autre mode de réalisation non illustré, que la fente 111 est ménagée au travers d'un boîtier posé par exemple sur la tablette arrière, ou dans une portière latérale du véhicule.

Une extrémité de la toile 13 est solidarisée à un tube à enrouleur (non représenté) tandis que l'autre est solidaire d'une barre de tirage 14.

Dans le mode de réalisation de la figure 1, la toile 13 est de forme trapézoïdale isocèle. L'invention s'applique bien sûr également à des stores dont la toile 13 est de forme trapézoïdale quelconque, ou trapézoïdale rectangle, par exemple dans le cas des fenêtres des portières latérales du véhicule.

Le store peut comprendre en outre une ou plusieurs (classiquement deux) biellettes (non représentées) de guidage et/ou de maintien de la toile 13 en position déployée.

En effet, les stores de ce type, actionnés manuellement, sont parfois associés à des biellettes susceptibles de maintenir, en position déployée, la toile en position d'occultation devant la baie vitrée. La ou les biellettes sont ainsi mobiles entre une position où elles sont sensiblement parallèles au tube enrouleur et une position où elles sont sensiblement perpendiculaires au tube enrouleur. Les biellettes peuvent être remplacées par des moyens assurant la même fonction (croisillons, compas, pistons...). Des moyens de rappel agissent sur le tube d'enroulement, de façon que le ré-enroulement de la toile se fasse dans de bonnes conditions.

Dans les stores motorisés, on prévoit également souvent la présence d'une ou plusieurs biellettes de guidage de la barre de tirage, ou de moyens similaires, assurant le guidage et le maintien de l'écran en position déployée, le déplacement de la ou des biellettes étant cette fois assuré par un moteur, provoquant l'enroulement ou le déploiement de la toile.

Dans le mode de réalisation représenté sur la figure 1, la barre de tirage 14 présente en chacune de ses extrémités un clapet 15, qui peut prendre une position à encombrement réduit quand le store est déployé, et une position d'obturation, lorsque le store est replié. Ces clapets 15 sont articulés aux extrémités de la barre 14. Ainsi, dans la position repliée de la figure 1, les clapets 15 s'alignent avec la barre de tirage 14, de sorte que l'ensemble "barre de tirage 14 + clapets 15" vient obturer l'intégralité de la fente 111. On empêche ainsi que des poussières ou de petits objets s'insèrent dans la fente 111 et risquent de détériorer le mécanisme du store. On obtient en outre un aspect esthétique amélioré, sans ouverture résiduelle sur les bords de la fente.

Sur la figure 1, les clapets 15 situés de part et d'autre de la barre 14 sont symétriques, la baie 12 à occulter étant de forme trapézoïdale isocèle. Dans d'autres modes de réalisation de l'invention, les clapets 15 peuvent bien sûr être dissymétriques. Par exemple, la barre de tirage peut présenter un clapet 15 à l'une de ses extrémités seulement, dans le cas où la baie à occulter est un trapèze rectangle.

Un clapet 15 en position d'obturation est détaillé en figure 2. Lorsque le store est replié, le clapet 15 est dans l'alignement de la barre de tirage 14, et en appui sur la tablette support.

Dans le mode de réalisation présenté en figure 2, une roulette 22, destinée à venir en appui sur la vitre 12 lorsque le store se déploie, est insérée dans une cavité de la barre de tirage 14.

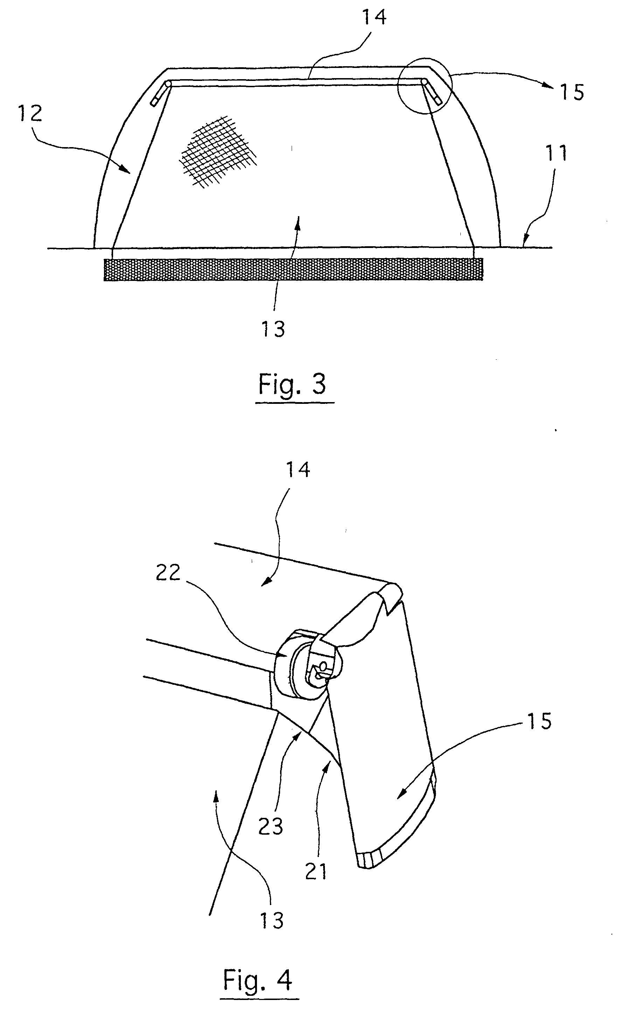

Une butée 21 formée sur le clapet 15 vient au contact de la paroi 23 de la barre de tirage 14 lorsque le clapet 15 passe en position à encombrement réduit, ainsi qu'illustré en figure 4.

La figure 3 représente le store de la figure 1 lorsque la toile 13 est déroulée. Dans cette illustration, la toile 13 est de forme trapézoïdale isocèle et vient occulter la baie 12.

Les clapets 15 sont en position à encombrement réduit, et sont alors sensiblement parallèles aux bordures latérales de la toile 13, ainsi que représenté sur la figure 4. La butée 21 est alors en appui sur la paroi 23 de la barre de tirage 14. Une telle butée permet par exemple d'empêcher que le clapet 15 ne vienne au contact de la toile 13, et n'en perturbe le déroulement.

Un ressort de torsion (non représenté), ou d'autres moyens de rappel, maintiennent le clapet 15 dans sa position à encombrement réduit, de façon à éviter qu'il se déplie de manière intempestive lorsque le store est au moins partiellement déployé.

Selon le mode de réalisation illustré en figures 2 et 4, la position de la roulette 22 est indépendante de la position pliée ou dépliée du clapet 15.

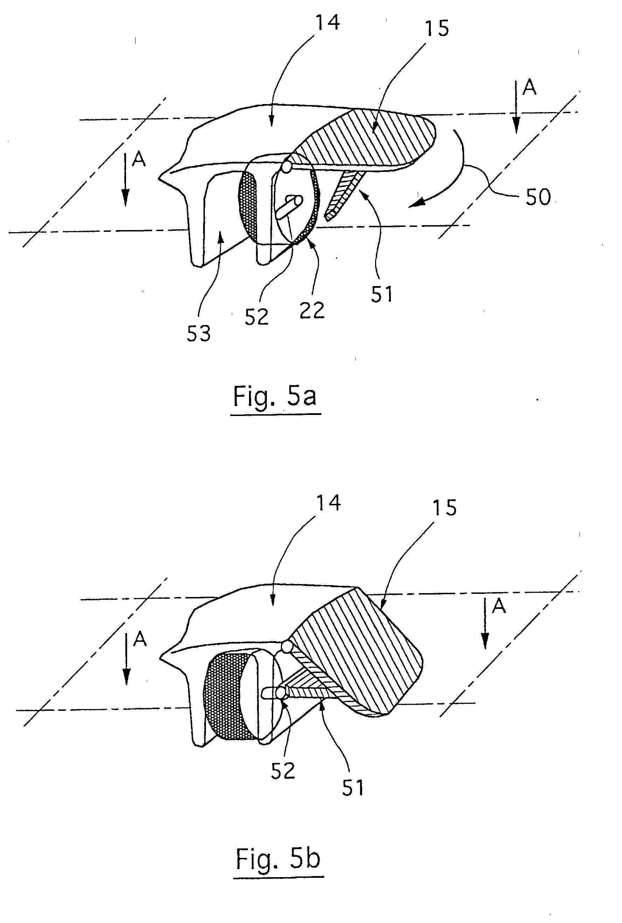

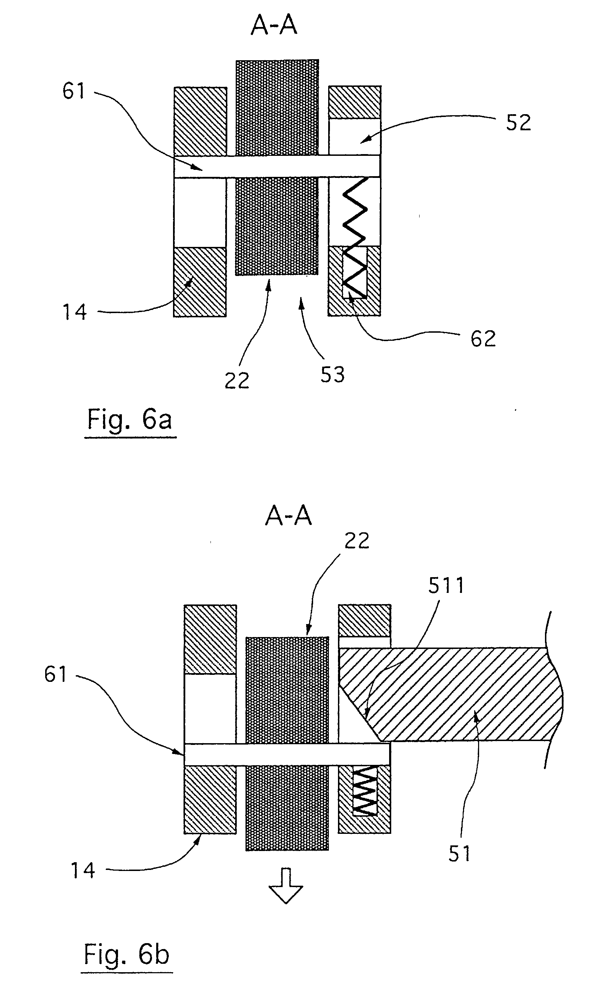

On présente désormais en relation avec les figures 5 et 6, un autre mode de réalisation de l'invention, dans lequel les clapets 15 situés de part et d'autre de la barre de tirage 14 coopèrent avec la roulette 22, de sorte que celle-ci puisse prendre une première position de stockage dans la barre 14, et une deuxième position de travail lorsque les clapets 15 sont en position à encombrement réduit.

Le clapet de la figure 5a est en position d'obturation de la fente, lorsque le store est replié. Dans cette position, la roulette 22 est en position de stockage dans une cavité 53 ménagée dans la barre de tirage 14. Le clapet 15 peut se replier selon la flèche 50, de façon à passer dans la position à encombrement réduit de la figure 5b.

Selon ce mode de réalisation particulier de l'invention, le clapet 15 est muni d'une languette 51, prévue pour coopérer avec un oblong 52 formé dans la paroi de la cavité 53, ainsi que représenté sur la figure 5b. L'axe de rotation de la roulette 22 est mobile dans l'oblong 52, de sorte que la roulette 22 passe dans une position de travail (figure 5b) lorsque le clapet 15 est en position à encombrement réduit.

Les figures 6a et 6b illustrent une vue selon la coupe AA des mécanismes des figures 5a et 5b.

Sur la figure 6a, le clapet 15 est en position d'obturation de la fente ; en d'autres termes, le store est enroulé et la barre 14 est en appui sur la fente 111. La roulette 22 est en position de stockage dans la cavité 53 de la barre de tirage 14. Elle est maintenue dans cette position par le ressort 62 qui vient en appui sur l'axe mobile 61 de la roulette 22 dans l'oblong 52.

Sur la figure 6b, le clapet 15 est en position à encombrement réduit ; en d'autres termes, le store est au moins partiellement déployé. La languette 51 est alors insérée dans l'oblong 52, et exerce sur l'axe 61 de la roulette 22 une force contraire à celle du ressort 62, de façon à maintenir la roulette 22 en position de travail. Dans cette position de travail, la roulette 22 vient en appui sur la vitre 12 que le store vient occulter.

D'autres moyens que le ressort 62 sont bien sûr envisageables pour assurer la même fonction.

On notera que la languette 51 présente un pan biseauté 511, de façon à faciliter le déplacement progressif de l'axe 61 lorsque le clapet 15 passe de la position d'obturation à la position à encombrement réduit. Un tel pan biseauté 511 facilite l'insertion de la languette 51 dans l'oblong 52.

Bien entendu, de nombreuses variantes et combinaisons de l'invention peuvent être envisagées. Notamment, on peut prévoir que l'entraînement du store soit ou non motorisé. Il est également possible que le store ne soit pas à enrouleur, mais pliant, ou autre. On peut encore envisager que la barre de tirage ne soit pas équipée de clapets articulés, mais d'éléments d'extrémité coulissants dans la barre de tirage.

Le coulissement de ces éléments d'extrémité pourrait alors être actionné par le mouvement de biellettes de maintien et/ou de guidage de la toile en position déployée, de façon à ce qu'ils soient déployés lorsque la barre de tirage vient obturer la fente, et insérés dans la barre de tirage lorsque la toile est au moins partiellement déroulée.

On pourrait encore envisager que la ou les roulettes soient stockées dans une cavité ménagée dans les éléments d'extrémité de la barre, et non dans la barre elle-même.

On peut également prévoir de remplacer les roulettes par des patins ou des moyens similaires d'appui et/ou de guidage et/ou d'entraînement.

## Revendications

1. Store pour véhicule automobile, destiné à occulter une baie (12) non rectangulaire, comprenant une barre de tirage (14) montée à l'extrémité libre d'une toile d'occultation (13) pouvant circuler dans une fente (111) entre une position repliée et une position déployée,
ladite barre de tirage (14) coopère avec deux éléments d'extrémité (15) symétriques pouvant prendre au moins deux positions :
- une position d'obturation de ladite fente (111), dans laquelle il s'étend sensiblement dans le prolongement de ladite barre de tirage (14), pour que l'ensemble formé par ladite barre de tirage (14) et le ou lesdits éléments d'extrémité (15) occulte l'intégralité de ladite fente (111) ;
- une position à encombrement réduit, dans laquelle il est replié par rapport à ladite barre de tirage (14), de façon que l'ensemble formé par ladite barre de tirage (14) et le ou lesdits éléments d'extrémité (15) présente une longueur inférieure à celle du même ensemble dans la position d'obturation de ladite fente,
**caractérisé en ce que** ladite barre de tirage (14) et/ou au moins un desdits éléments d'extrémité (15) portent au moins une roulette (22) destinée à prendre appui contre une vitre à occulter, chacune desdites roulettes (22) coopérant avec un desdits éléments d'extrémité correspondants et étant :
- dans une position de stockage, au moins partiellement dans un logement (53) ménagé dans ladite barre de tirage (14) et/ou au moins un desdits éléments d'extrémité (15), lorsque ledit élément d'extrémité (15) est dans sa position d'obturation de ladite fente (111) ;
- dans une position de travail, lorsque ledit élément d'extrémité (15) est dans sa position à encombrement réduit.

2. Store selon la revendication 1, **caractérisé en ce qu'**au moins une desdites roulettes (22) passe de ladite position de stockage à ladite position de travail
lorsque ledit élément d'extrémité (15) passe de ladite position d'obturation de ladite fente à ladite position à encombrement réduit.

3. Store selon l'une quelconque des revendications 1 et 2, **caractérisé en ce que** ladite roulette (22) passe de ladite position de travail à ladite position de stockage par contact avec le bord de la fente (111), lors du repliement de la toile.

4. Store selon la revendication 3, **caractérisé en ce qu'**il comprend un ressort (62) facilitant le passage de ladite position de travail à ladite position de stockage.

5. Store selon l'une quelconque des revendications 2 à 4, **caractérisé en ce que** ledit élément d'extrémité (15) coopère avec une languette (51) guidant l'axe (61) de ladite roulette (22) dans un oblong prévu à cet effet.

6. Store selon l'une quelconque des revendications 1 à 5, **caractérisé en ce que** chacun desdits éléments d'extrémité coulisse dans ladite barre de tirage.

7. Store selon l'une quelconque des revendications 1 à 5, **caractérisé en ce que** chacun desdits éléments d'extrémité forme un clapet (15), articulé à une des extrémités de ladite barre de tirage.

8. Store selon la revendication 7, **caractérisé en ce que**, dans ladite position à encombrement réduit, ledit clapet (15) forme un angle non nul avec ladite barre de tirage (14), et se dirige sensiblement parallèlement au bord latéral correspondant de ladite toile (13).

9. Store selon l'une quelconque des revendications 1 à 8, **caractérisé en ce qu'**il comprend des moyens de rappel tendant à ramener et/ou à maintenir ledit élément d'extrémité (15) dans sa position à encombrement réduit.

10. Store selon la revendication 9, **caractérisé en ce que** lesdits moyens de rappel comprennent un ressort de torsion.

11. Store selon l'une quelconque des revendications 1 à 10, **caractérisé en ce que** ladite toile (13) est montée sur un tube d'enroulement.

12. Store selon l'une quelconque des revendications 1 à 11, **caractérisé en ce que** le déploiement et/ou le repliement de ladite toile (13) est motorisé.

13. Store selon l'une quelconque des revendications 1 à 12, **caractérisé en ce qu'**il est prévu pour être monté sous une tablette arrière (11) de véhicule, dans laquelle est ménagée ladite fente (111).

## Claims

1. Blind for a motor vehicle, designed to cover a non-rectangular opening (12), comprising a draw bar (14) which is fitted at the free end of a covering cloth (13) which can circulate in a slot (111), between a coiled-up position and a deployed position,
the said draw bar (14) co-operates with two symmetrical end elements (15) which can assume at least two positions:
- a position for closure of the said slot (111), in which it extends substantially in the extension of the said draw bar (14), such that the assembly formed by the said draw bar (14) and the said end element(s) (15) covers all of the said slot (111);
- a reduced-dimension position, in which it is folded back relative to the said draw bar (14), such that the assembly formed by the said draw bar (14) and the said end element(s) (15) has a length which is shorter than that of the same assembly in the position for closure of the said slot,
**characterised in that** the said draw bar (14) and/or at least one of the said end elements (15) supports at least one roller (22) which is designed to be supported against a window to be covered,
each of the said rollers (22) co-operating with one of the corresponding said end elements and being:
- in a storage position, at least partially in a receptacle (53) provided in the said draw bar (14) and/or at least one of the said end elements (15), when the said end element (15) is in its position of closure of the said slot (111);
- in a work position, when the said end element (15) is in its reduced-dimension position.

2. Blind according to claim 1, **characterised in that** at least one of the said rollers (22) goes from the said storage position to the said work position when the said end element (15) goes from the said position of closure of the said slot to the said reduced-dimension position.

3. Blind according to either of claims 1 and 2,
**characterised in that** the said roller (22) goes from the said work position to the said storage position by contact with the edge of the slot (111), during the coiling-up of the cloth.

4. Blind according to claim 3, **characterised in that** it comprises a spring (62) which facilitates the passage from the said work position to the said storage position.

5. Blind according to any one of claims 2 to 4,
**characterised in that** the said end element (15) co-operates with a tongue (51) which guides the shaft (61) of the said roller (22) in an oblong provided for this purpose.

6. Blind according to any one of claims 1 to 5,
**characterised in that** each of the said end elements slides in the said draw bar.

7. Blind according to any one of claims 1 to 5,
**characterised in that** each of the said end elements forms a shutter (15), which is articulated on one of the ends of the said draw bar.

8. Blind according to claim 7, **characterised in that**, in the said reduced-dimension position, the said shutter (15) forms an angle which is not zero with the said draw bar (14), and is positioned substantially parallel to the corresponding lateral edge of the said cloth (13).

9. Blind according to any one of claims 1 to 8,
**characterised in that** it comprises return means which tend to return and/or maintain the said end element (15) in its reduced-dimension position.

10. Blind according to claim 9, **characterised in that** the said return means comprise a torsion spring.

11. Blind according to any one of claims 1 to 10,
**characterised in that** the said cloth (13) is fitted on a winding tube.

12. Blind according to any one of claims 1 to 11,
**characterised in that** the deployment and/or coiling up of the said cloth (13) is motorised.

13. Blind according to any one of claims 1 to 12,
**characterised in that** it is designed to be fitted beneath a vehicle rear shelf (11), in which the said slot (111) is provided.

## Patentansprüche

1. Rollo für Kraftfahrzeuge, das eine nicht rechteckige Öffnung (12) verdecken soll, das eine am freien Ende eines Verdeckungsvorhangs (13) angebrachte Zugstange (14) aufweist, wobei der Vorhang durch einen Schlitz (111) zwischen einer zusammengerollten und einer entfalteten Stellung läuft,
wobei die Zugstange (14) mit zwei symmetrischen Endelementen (15) zusammenwirkt, die mindestens zwei Positionen einnehmen können:
- eine Position zum Verschließen des Schlitzes (111), wobei sich jedes dieser Elemente in etwa in der Verlängerung der Zugstange (14) erstreckt, damit die von der Zugstange (14) und dem Endelement bzw. den Endelementen (15) gebildete Gruppe den Schlitz (111) insgesamt abdeckt;
- eine Position mit geringem Platzbedarf, bei dem jedes dieser Elemente mit der Zugstange (14) einen Winkel bildet, damit die von der Zugstange (14) und dem Endelement bzw. den Endelementen (15) gebildete Gruppe kürzer ist, als dieselbe Gruppe in der Verschlussposition des Schlitzes,
**dadurch gekennzeichnet, dass** die Zugstange (14) und/oder mindestens eines der Endelemente (15) mindestens eine Rolle (22) aufweisen, die sich auf eine zu verdeckende Scheibe stützt,
wobei jede dieser Rollen (22) mit einem der entsprechenden Endelemente zusammenwirkt und:
- sich in der Lagerposition befinden, wenn sie mindestens teilweise in einer in der Zugstange (14) sowie in mindestens einem der Endelemente (15) eingearbeiteten Vertiefung (53) liegen, wenn sich das entsprechende Endelement (15) in der Verschlussposition des Schlitzes (111) befindet;
- sich in der Arbeitsposition befindet, wenn sich das Endelement (15) in der Position mit geringem Platzbedarf befindet.

2. Rollo nach Anspruch 1,
**dadurch gekennzeichnet, dass** mindestens eine der Rollen (22) von der Lagerposition in die Arbeitsposition übergeht, wenn das Endelement (15) von der Verschlussposition des Schlitzes in die Position mit geringem Platzbedarf übergeht.

3. Rollo nach einem der Ansprüche 1 oder 2,
**dadurch gekennzeichnet, dass** die Rolle (22) von der Arbeitsposition in die Lagerposition durch Berührung mit dem Rand des Schlitzes (111) beim Zusammenrollen des Vorhangs übergeht.

4. Rollo nach Anspruch 3,
**dadurch gekennzeichnet, dass** es eine Feder (62) aufweist, welche den Übergang von der Arbeitsstellung in die Lagerstellung fördert.

5. Rollo nach einem der Ansprüche 2 bis 4,
**dadurch gekennzeichnet, dass** das Endelement (15) mit einer Lasche (51) zusammenwirkt, welche die Achse (61) der Rolle (22) in ein dafür vorgesehenes Längsloch führt.

6. Rollo nach einem der Ansprüche 1 bis 5,
**dadurch gekennzeichnet, dass** jedes der Endelemente innerhalb der Zugstange gleitet.

7. Rollo nach einem der Ansprüche 1 bis 5,
**dadurch gekennzeichnet, dass** jedes der Endelemente eine Klappe (15) bildet, die jeweils drehbar an einem Ende der Zugstange befestigt ist.

8. Rollo nach Anspruch 7,
**dadurch gekennzeichnet, dass** in der Position mit geringem Platzbedarf die Klappe (15) einen Winkel mit der Zugstange (14) bildet, der größer als null ist, und in etwa parallel zum entsprechenden seitlichen Rand des Vorhangs (13) läuft.

9. Rollo nach einem der Ansprüche 1 bis 8,
**dadurch gekennzeichnet, dass** es über Rückholmittel verfügt, die das Endelement (15) in die Position mit geringem Platzbedarf zurückholen oder dort halten können.

10. Rollo nach Anspruch 9,
**dadurch gekennzeichnet, dass** die Rückholmittel eine Torsionsfeder umfassen.

11. Rollo nach einem der Ansprüche 1 bis 10,
**dadurch gekennzeichnet, dass** der Vorhang (13) auf einem Rohr zum Aufrollen aufgebracht ist.

12. Rollo nach einem der Ansprüche 1 bis 11,
**dadurch gekennzeichnet, dass** das Auf- bzw. Abrollen des Vorhangs (13) motorisiert ist.

13. Rollo nach einem der Ansprüche 1 bis 12,
**dadurch gekennzeichnet, dass** es so ausgebildet ist, dass es unter der Hutablage (11) eines Fahrzeuges, in welcher der Schlitz (111) eingearbeitet ist, angebracht werden kann.
